# FASCICULE DE BREVET EUROPEEN

(11) **EP 3 045 698 B1**
(45) Date de publication et mention de la délivrance du brevet: **14.11.2018**
(21) Numéro de dépôt: 15201950.1
(22) Date de dépôt: 22.12.2015
(51) Int. Cl.: F02C 6/18, B01D 53/00, F23J 15/06

(54) **DISPOSITIF ET PROCÉDÉ DE RÉCUPÉRATION DE CHALEUR CONTENUE DANS DES GAZ DE COMBUSTION**
VORRICHTUNG UND VERFAHREN ZUR RÜCKGEWINNUNG VON IN VERBRENNUNGSGASEN ENTHALTENER WÄRME
DEVICE AND METHOD FOR RECOVERING HEAT CONTAINED IN COMBUSTION GASES

(30) Priorité: 19.01.2015 FR 1500097
(43) Date de publication de la demande: 20.07.2016
(73) Titulaire: Soize, Jerome, 93400 Saint-Ouen (FR)
(72) Inventeur: Soize, Jerome, 93400 Saint-Ouen (FR)
(74) Mandataire: Gauchet, Fabien Roland

(56) Documents cités:
- US-A- 4 126 000
- US-A1- 2004 253 165
- US-A1- 2012 037 096

## Description

### DOMAINE TECHNIQUE DE L'INVENTION

L'invention se rapporte au domaine de la récupération de la chaleur et plus spécifiquement de la chaleur latente et sensible contenue dans des gaz de combustion. L'épuration des gaz de combustion contenant une certaine teneur en humidité est en outre concernée par l'invention.

### ETAT DE LA TECHNIQUE ANTERIEURE

Pendant longtemps les matériaux disponibles et connus ne permettaient pas de s'affranchir des points de rosée acide lors de la condensation des fumées, provocant alors de graves dégradations par corrosion. Désormais, la panoplie de matériaux, de revêtements (téflon®, PTFE, carbone, céramique, kevlar, ébonite, verre, réactifs,...) et de procédés chimiques permettant de traiter l'acidité des fumées et des condensats sont nombreux.

Au sens de l'invention, les gaz de combustion sont les gaz issus d'une combustion. On sait que dès lors qu'il y a combustion en présence d'hydrogène il y a présence de vapeur d'eau, cela d'après les équations de combustion H +2O = H2O. Dès lors que l'air est pris comme comburant il y a présence de vapeur d'eau contenue dans l'air selon l'hydrométrie de celui-ci. Et dès lors qu'il y a de l'eau dans le combustible (bois, biomasse, déchets ménagers), il y a présence de vapeur d'eau dans les fumées ou gaz issus de la combustion.

On connait les cycles de Carnot pour les machines thermiques et turbines à vapeur, les cycles d'Otto pour les moteurs à compression thermique, de Baryton pour les turbines à gaz, de Rankine et d'Ericsson pour les moteurs de Sterling. Cependant l'art antérieur ne s'intéresse pas spécifiquement à la compression des gaz de combustion pour en récupérer le maximum de chaleur latente. Cette problématique est traitée à la marge, pour des installations industrielles spécifiques dont le but premier n'est pas nécessairement de condenser et de récupérer la chaleur latente des gaz de combustion. Les gains énergétiques liés à une telle récupération d'énergie paraissent cependant intéressants comme il sera explicité ci-après.

On sait que le terme « latent » signifie « qui ne se manifeste pas ».

Il apparait en outre que les outils d'analyse mathématique pour l'étude des pressions partielles de la vapeur d'eau contenue dans les gaz, expliquant les changement d'état de la vapeur d'eau et l'énergie latente dissipée, ne sont pas appropriés pour des gaz chauds, qui plus est comprimés. Il est nécessaire de se pencher sur les propriétés propres à la compression d'un gaz pour mettre en évidence ce que les lois thermodynamiques connues ne permettent pas d'approcher facilement et de façon fiable. Par ailleurs, les logiciels actuels de dimensionnement des chaudières ne prennent pas en compte la pression des gaz de combustion circulant dans les corps de chauffe. Ainsi, certaines configurations ne sont actuellement pas permises, notamment pour cause de pincement de températures sur échangeur, et/ou températures de changement d'état inappropriées.

En outre, les meilleures chaudières individuelles à condensation actuellement disponibles, précisent que les performances les plus élevées ne peuvent pas être atteintes en cas de production d'eau chaude sanitaire ou tout au long de l'année, notamment en mi-saison, du fait que la température de l'eau du circuit de retour de l'eau de chauffage en chaudière est trop élevée et ne permet pas la pleine condensation des gaz de combustion aux pressions ou dépressions habituellement rencontrées côté gaz de combustion.

Il est aussi connu que les gaz de combustion des chaudières (et autres fours ou installations de combustion) circulent à des pressions absolues négatives, pour qu'en cas de défaut d'étanchéité, ce soit l'air ambiant qui pénètre dans les fumées plutôt que des gaz de combustion ne se dissipent dans l'air extérieur ambiant, notamment du monoxyde de carbone pouvant s'avérer être mortel.

Le document US 4 126 000 décrit un appareil de combustion industriel à échangeur de chaleur dans lequel la chaleur latente des gaz de combustion est transférée à un fluide secondaire d'un brûleur. Les gaz refroidis sont purifiés par refroidissement des composants les moins volatils. Les gaz purifiés sont relachés sans utilisation de cheminée de gaz résiduels. Les composants purifiés sont collectés et neutralisés.

Le document US 2004/0253165 décrit une installation dans laquelle les fumées issues de turbine sont refroidies à travers des échangeurs de chaleur et comprimés. Ces fumées sont apauvris en CO2 dans une unité de traitement puis chauffées dans des échangeurs de chaleur puis envoyés vers des turbines. L'énergie récupérée dans les échangeurs de chaleur est transformée en énergie mécanique utilisable au niveau d'au moins une turbine.

Le document US 2012/0037096 divulgue une unité industrielle de combustion qui produit des gaz de combustion , et comprend un échangeur de chaleur associé auxdits gaz ; un moyen de dilution des gaz est prévu en aval de l'échangeur de chaleur asservi à une température donnée ; la dilution des gaz est opérée par une alimentation en air.

Ces documents ne reflètent qu'un arrière-plan technologique de l'invention.

### EXPOSE DE L'INVENTION

L'invention vise à remédier aux inconvénients de l'état de la technique et notamment présente l'intérêt de récupérer un maximum de chaleur latente et sensible en conditionnant les gaz de combustion, pour en transférer la chaleur latente et sensible à un fluide caloporteur, pour être utilisée ou valorisée, comme expliqué plus en détail ci-après. Par «récupérer un maximum de chaleur latente et sensible » on entend une récupération de l'ordre de 100% du Pouvoir Calorique Supérieur - PCS- ; ceci est notamment dû au fait que la présente invention permet de récupérer une partie significative de la chaleur latente de l'eau contenue dans l'air. L'expression « chaleur latente et sensible » correspond au sens usuel de la thermodynamique.

Pour ce faire est proposé selon un premier aspect de l'invention un dispositif de récupération de la chaleur contenue dans des gaz de combustion, tel que défini dans la première revendication ; le dispositif est caractérisé en ce qu'il comprend : un circuit primaire dans lequel circulent les gaz de combustion et comprenant dans le sens de circulation desdits gaz : - une enceinte pour l'entrée desdits gaz de combustion ; - une enceinte étanche sous pression munie d'un compresseur ; - un média froid sur lequel a lieu un échange de chaleur avec lesdits gaz afin de récupérer la chaleur au-delà du PCS ; - un moyen de réglage de type vantelle apte à adapter et à réguler la perte de charge créée en amont ; - un récupérateur de condensats placé sous ledit média froid et coopérant avec un organe de détente ou une pompe, et un moyen d'évacuation ; - un média chaud apte à augmenter la température desdits gaz ; - une sortie pour les gaz de combustion traités et secs ; le dispositif selon l'invention comprend en outre un circuit secondaire comprenant des moyens de circulation d'un fluide caloporteur à travers ledit média froid,.

Préférentiellement, ledit média froid est apte à condenser la vapeur d'eau contenue dans les gaz de combustion ; le compresseur est apte à transmettre à des gaz chauds une pression proche de la pression partielle de saturation de la vapeur d'eau.

De façon préférée, ledit circuit primaire comprend en outre un moyen de surchauffe, au moins une vanne de répartition étant placée en aval dudit média froid et en amont du moyen de surchauffe relativement au sens d'écoulement dudit fluide caloporteur dans le dispositif, ladite vanne de répartition permettant une dérivation régulée dudit fluide caloporteur vis-à-vis dudit média chaud.

Le terme « fluide caloporteur » recouvre l'ensemble des liquides et gaz pouvant être mis en oeuvre pour la récupération « maximale » de chaleur latente et sensible contenue dans les gaz de combustion d'un combustible pris à son Pouvoir Calorifique Supérieur (PCS), et dont les produits de combustion sont ramenés à 0° Celsius. Or, cet abus de langage rencontré dans la littérature omet le fait que de l'énergie interne est contenue dans la matière jusqu'au zéro absolu de 0°Kelvin, soit -273 ° Celsius. Ainsi, des fluides caloporteurs spécifiques (notamment frigorigènes) peuvent permettre de récupérer « un maximum de chaleur latente et sensible » sur des gaz de combustion, bien au-delà du Pouvoir Calorifique Supérieur (PCS) du combustible considéré.

Grâce à la récupération de la chaleur émise lors de la compression (si possible étagée avec refroidissement intermédiaire tendant vers une compression adiabatique offrant encore un meilleur rendement), et/ou à l'assistance à la compression via une turbine de détente, la présence de vapeur d'eau dans les gaz de combustion est exploitée énergétiquement. Il s'agit d'une optimisation des procédés existants ; cette optimisation comprend notamment une compression des gaz de combustion préalablement à la récupération d'énergie sensible et latente.

L'expression « média froid » comprend les échangeurs, corps de chaudières, gaines, tuyaux, cheminées aptes à servir de surface froide pour la récupération d'énergie.

Avantageusement, ledit circuit primaire peut comprendre un média chaud apte à augmenter la température desdits gaz, ledit média chaud étant placé à proximité de l'enceinte de sortie.

Selon une caractéristique du dispositif, celui-ci comprend en outre un moyen apte à éviter l'entrainement des gouttelettes présentes dans les gaz de combustion, tel qu'un séparateur de gouttelettes disposé(s) entre le média froid et le média chaud.

Par ailleurs, en présence d'un séparateur de gouttelettes et d'un moyen de régulation de la charge des gaz de combustion, ledit séparateur de gouttelettes est placé en amont dudit moyen de régulation de la charge. Le moyen de régulation de la charge peut être constitué de vantelles, qui par ailleurs peuvent être régulées afin d'améliorer la récupération d'énergie.

Selon un autre aspect de l'invention, ladite vanne de répartition permet une dérivation (partielle ou totale) régulée dudit fluide caloporteur vis-à-vis dudit média chaud. Cette alternative est intéressante lorsqu'il est nécessaire d'augmenter la température des gaz sortant du séparateur de gouttelettes, notamment pour respecter certaines conditions de mise à l'atmosphère des gaz de combustion ( température, vitesse, densité).

Selon un mode de réalisation de l'invention, ledit média froid comprend un échangeur tubulaire de type à contre-courant ou à courants croisés.

Par ailleurs, le dispositif selon l'invention peut comprendre une pompe à chaleur thermodynamique placée en amont dudit média froid ou bien à proximité du moyen d'évacuation des condensats afin d'optimiser la récupération de chaleur issue des gaz de combustion.

Sans sortir du cadre de l'invention, le dispositif comprend un moyen apte à neutraliser le potentiel hydrogène (pH), placé soit dans l'enceinte étanche, soit en aval de l'organe de détente des condensats, soit en amont de ladite pompe à chaleur lorsque la pompe à chaleur est placée à proximité du moyen d'évacuation des condensats.

Additionellement, le dispositif conforme à l'invention peut comprendre un moyen de captation des polluants présents dans lesdits condensats.

L'invention concerne en outre un procédé de récupération de la chaleur contenue dans des gaz de combustion chauds, tel que défini par la revendication 8. Le procédé est mis en oeuvre à l'aide d'un dispositif tel que revendiqué et il comprend les étapes consistant à : a) dans le circuit primaire - comprimer lesdits gaz de combustion ; - condenser l'humidité contenue dans lesdits gaz à une température supérieure à la température de condensation des gaz non comprimés ; - recueillir les condensats issus de ladite condensation ; - extraire les polluants présents dans les condensats ; b) dans le circuit secondaire - faire circuler un fluide caloporteur afin notamment de condenser l'humidité, de chauffer lesdits gaz condensés.

Préférentiellement, le procédé permet de surchauffer ledit fluide caloporteur par refroidissement desdits gaz avant de les comprimer.

Le procédé selon l'invention consiste en outre à réguler ladite compression des gaz de combustion soit directement au niveau dudit compresseur, soit en agissant sur le moyen de réglage apte à réguler ladite perte de charge.

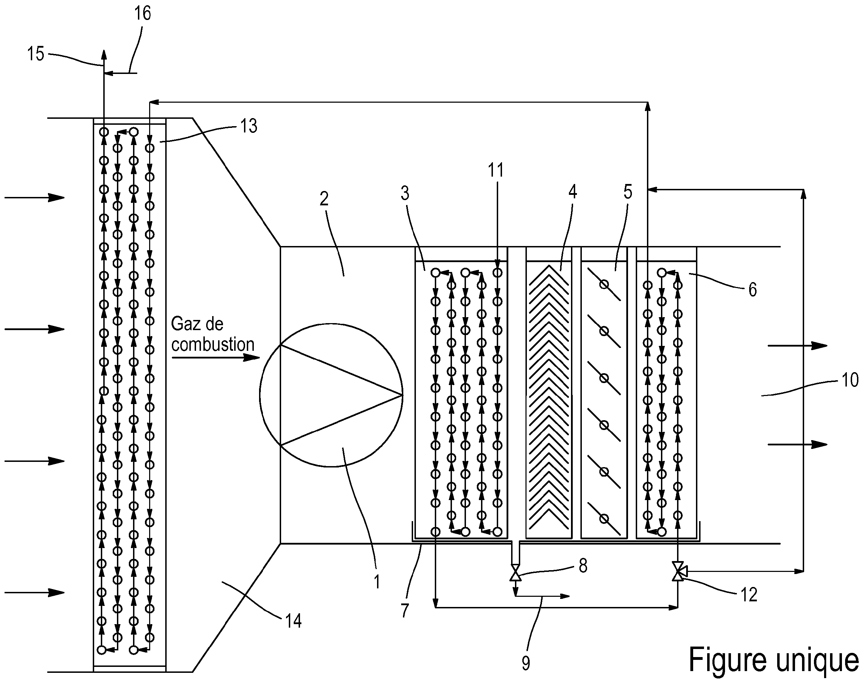

### BREVE DESCRIPTION DE LA FIGURE

[001]D'autres caractéristiques, détails et avantages de l'invention ressortiront à la lecture de la description qui suit, en référence à la figure annexée qui illustre une coupe schématique d'un dispositif conforme à un mode de réalisation de l'invention.

Pour plus de clarté, les éléments identiques ou similaires sont repérés par des signes de référence identiques sur l'ensemble des figures.

### DESCRIPTION DETAILLEE D'UN MODE DE REALISATION

La figure unique fait apparaître le dispositif ou installation d'une façon schématique. On y voit les éléments structurels et fonctionnels essentiels de l'invention qui comprennent un circuit dit primaire associé à l'écoulement des gaz de combustion à traiter, et un circuit dit secondaire correspondant à la circulation du fluide caloporteur tel que de l'eau, un fluide frigorigène ou organique.

Les gaz chauds à traiter débouchent selon les flèches du côté gauche de la figure, dans un conduit d'arrivée 14. La température desdits gaz peut être comprise usuellement entre 100°C et 300°C. Les gaz peuvent si nécessaire traverser un surchauffeur 13 placé dans le conduit 14, en amont d'une enceinte étanche 2 sous pression qui est munie d'un compresseur 1. Le compresseur 1 transmet aux gaz chauds une pression proche de la pression partielle de saturation de la vapeur d'eau ; Cette pression varie en fonction de la température des gaz chauds et de leur teneur en humidité. L'homme de métier détermine la compression des gaz chauds la plus appropriée, et il la régule notamment en faisant varier la vitesse de rotation dudit compresseur 1 et/ou de vantelles 5 réglables prévues à cet effet. A titre illustratif, la pression dans l'enceinte 2 peut être comprise entre 2 et 10 bars absolus.

La « pression partielle de saturation de la vapeur d'eau » correspond à la pression à laquelle la vapeur d'eau contenue dans les gaz de compression commence à se condenser, pour une température et une teneur en eau données (soit en humidité relative, soit en humidité absolue). Le compresseur 1 et/ou les vantelles 5 agissent sur cette pression.

Une fois comprimés au niveau de l'enceinte étanche 2 sous pression, les gaz de combustion sont dirigés vers un média froid 3, de type échangeur alimenté à contre-courant ou courants croisés, afin d'abaisser continuellement les températures desdits gaz, jusqu'à une température minimale en sortie du média 2. Dans les cas les plus usuels, la chute de température peut varier de 10% à 90% entre l'entrée et la sortie du média 2.

Par « enceinte étanche sous pression » on entend une enceinte pourvue d'une étanchéité vis-à-vis de l'extérieur du dispositif, quels que soient les températures et pressions mises en jeu. A titre illustratif, les pressions dans l'enceinte 2 peuvent varier entre 2 et 10 bars absolus, et les températures de fonctionnement entre 100 et 300 degrés Celsius au niveau de l'admission des gaz, et avec des températures moindres, voire négatives en sortie du média froid. Le fait d'appliquer une pression aux gaz chauds modifie la valeur de pression de vapeur saturante et tend à initier la condensation à des températures plus élevées. Il est intéressant de noter que les performances instantanées permettent de produire davantage de condensat et de récupérer davantage d'énergie latente. Le procédé associé au dispositif selon l'invention permet d'améliorer les performances car de façon connue, ces performances sont limitées (notamment pour les chaudières domestiques) par la température de retour de l'eau de chauffage, conditionnée par la saison de l'année ; pour la production d'eau chaude les performances sont limitées par la température de production de l'eau chaude sanitaire.

En aval du média froid 3, on peut prévoir un séparateur à gouttelettes 4 apte à maintenir sous pression le média froid 3 et à éviter l'entrainement des particules contenues dans les gaz en aval du dispositif. Le séparateur 4 constitue une perte de charge additionnelle à celle crée par le média froid 3. Les pertes de charge étant habituellement à éviter, il est possible d'utiliser d'autres systèmes, tels que par exemple un déflecteur circulaire à diamètre variable.

En outre afin de mieux maitriser les variations de charge des gaz de combustion, en fonction de l'allure du four, de la chaudière ou de l'équipement thermique considéré, des vantelles 5 peuvent être installées complémentairement ; les vantelles 5 peuvent être régulées de différentes façons afin d'optimiser la récupération d'énergie. Les vantelles peuvent être remplacées par tout autre moyen permettant de faire varier la perte de charge en sortie du média froid 3, tel que par exemple un déflecteur circulaire à diamètre de passage variable.

Le dispositif et le procédé selon l'invention permettent globalement d'accroitre la récupération d'énergie contenue dans les gaz de combustion, notamment celle dissipée lors de la condensation de la vapeur d'eau dans ceux-ci, en fonction de la pression de vapeur saturante dans l'enceinte sous pression 2. Il est donc intéressant d'asservir la régulation de la perte de charge afin de maintenir une certaine perte de charge notamment au niveau du média froid 3, c'est-à-dire une pression, apte à maintenir les performances de l'invention, quelles que soient les conditions extérieures ou l'allure de l'équipement de chauffe dans lequel est disposé le dispositif selon l'invention. On pense ici aux variations saisonnières ou au régime de charge imposé au moyen de combustion.

En aval du média froid 3, éventuellement du séparateur de gouttelettes 4, et éventuellement des vantelles 5, on dispose préférentiellement un média chaud 6 apte à élever la température des gaz issus du média froid. La présence du média chaud 6 améliore en outre la dispersion des gaz dans l'atmosphère, en aval, qui sont très peu humides donc légèrement plus lourds. On sait en effet que l'air humide est plus léger que l'air sec ; le média chaud 6, qui élève la température des gaz, les rend plus légers, donc plus volumineux et présentent une excellente dispersion.

L'homme de métier cherche par ailleurs à améliorer l'étanchéité du dispositif, pour des raisons à la fois de sécurité et réglementaires afin notamment d'éviter tout risque de fuite de gaz de combustion à l'extérieur du dispositif. Cet aspect obligatoire et réglementaire ne sera pas davantage détaillé ici.

Associé à la condensation : en partie inférieure du média froid 3, du séparateur 4 et des vantelles 5 permettant de réguler la perte de charge, on place un bac 7 de récupération des condensats, dimensionné pour récupérer l'ensemble des condensats, selon le débit et l'humidité des gaz de combustion, ainsi que selon le débit d'eau admissible au niveau d'un organe de détente ou d'une pompe 8 ou élément déprimogène ; le bac 7 permet avantageusement la récupération des condensats avant leur régulation grâce à l'organe de détente ou à la pompe 8. Les condensats sont ensuite dirigés vers le moyen 9, à faible pression et sans fuite en dehors des enceintes 14, 2.

Le procédé associé au dispositif permet d'utiliser (voire de s'affranchir) le conduit 10 d'échappement des gaz habituellement présent, situé en aval de l'enceinte étanche 2 sous pression. Le prolongement de l'enceinte étanche 2 sous pression permet de réduire significativement le diamètre utile du conduit 10, jusqu'à la mise à l'atmosphère (cheminée) ou tout autre exutoire. Ainsi la présente invention répond parfaitement aux vitesses et températures imposées par les normes pour les installations industrielles, à la nécessité d'une parfaite étanchéité, et à la génération d'un panache réduit de fumées propres en sortie du dispositif.

Le dispositif selon l'invention comprend en outre un circuit secondaire pour un fluide caloporteur, alimenté en fluide froid ; le fluide froid arrive au niveau du média froid 3 (arrivée 11), circule dans le média froid 3 où il se réchauffe lentement. Le fluide froid présente une pression et un débit contrôlés notamment pour un possible changement d'état à une température donnée ; en sortie du média froid 3, le fluide caloporteur est éventuellement dirigé vers une vanne de répartition 12, ou vers des vannes en sens inverses, pour alimenter à la demande (si requis) le média chaud 6, qui après le point de mélange, alimente un surchauffeur 13 (si présent). La vanne de répartition 12 permet au liquide sortant du média froid 3, de by-passer le média chaud 6 afin par exemple d'alimenter directement le surchauffeur 13 du fluide caloporteur 11. Concernant le fluide caloporteur, son changement de phase (liquide en vapeur) est une condition importante dans la conception et le dimensionnement du dispositif.

**Le** fluide caloporteur ayant ou non traversé le média chaud 6, est préférentiellement dirigé vers le surchauffeur 13 qui est disposé dans le conduit 14 d'arrivée des gaz de combustion. Le surchauffeur 13, ici disposé dans le conduit d'entrée 14, permet de fournir une vapeur surchauffée au niveau de sa sortie fluidique secondaire 15, à un ensemble spécifique (de type turbinage, cycle de Rankin, pompe à chaleur thermodynamique, utilisation de vapeur vive ou autre) ou à un réseau de chaleur. Pour une parfaite maîtrise de la qualité de la vapeur délivrée en sortie du circuit secondaire, une désurchauffe (associée à un moyen de désurchauffe 16) peut notamment être prévue.

Le conditionnement de la vapeur délivrée en sortie du circuit secondaire est une donnée prépondérante dans la conception du dispositif selon l'invention, notamment en ce qui concerne son dimensionnement ; en outre les besoins en termes de puissance, températures des éléments en amont du dispositif, conditionnent sa conception.

Il est ici précisé que les gaz de combustion sortant de l'enceinte étanche pressurisée 10 sont débarrassés de nombreux polluants atmosphériques (composés soufrés, composés chlorés, métaux lourds, poussières,...), qui se retrouvent à l'évacuation des condensats 9 et sont facilement traitables après que le pH ait été neutralisé. Une pompe à chaleur (non représentée sur la figure unique) peut permettre d'abaisser la température des condensats et de récupérer une énergie facilement valorisable. Les condensats peuvent être ensuite traités et potentiellement préparés en eau chaudière pour une production de vapeur en circuit ouvert, ou ils peuvent être réinjectés au niveau du fluide froid 11 si le fluide froid est de l'eau. Le cas échéant ces condensats sont évacués vers un exutoire de type réseau d'eaux usées ou milieu naturel. Le fluide froid peut présenter des températures négatives et ainsi permettre la récupération quasi totale du Pouvoir Calorifique Supérieur (PCS) du combustible considéré, pour ensuite être valorisé en vapeur ou sous toute autre forme. Le dispositif selon l'invention ainsi que le procédé mis en oeuvre permettent de piéger dans les condensats recueillis dans le bac 7, un certain nombre de polluants, tout en comprimant les gaz de combustion afin d'en extraire le maximum d'énergie sensible et latente.

L'invention couvre le procédé mis en oeuvre par le dispositif décrit ci-dessus, structurellement et fonctionnellement.

La valorisation énergétique que permet ce procédé innovant présente un avantage économique avéré par rapport aux technologies connues pour la récupération de chaleur latente dans les gaz de combustion, compte tenu du prix des énergies combustibles. En outre la compression des gaz d'échappement permet de réduire significativement les dimensions et tailles des équipements situés en aval du compresseur 1, tant pour les principaux organes du procédé que ceux permettant la canalisation des gaz vers la mise à l'atmosphère, ou tout autre exutoire.

L'adaptation de la taille du procédé innovant permet son implantation en aval des gaz de combustion qu'ils soient en pression ou dépression. De manière intéressante, le dispositif selon l'invention peut être implanté sur des installations existantes, que les gaz de combustion soient en dépression ou en légère surpression. Il s'agit toujours de maintenir une pression donnée en amont du compresseur 1, de manière à respecter les normes ou contraintes fournies par le constructeur du moyen de combustion. De façon nouvelle et inventive la présente invention permet de conditionner les gaz issus de la combustion en les comprimant, avant de procéder à la récupération d'énergie et/ou à la dépollution des polluants présents dans les condensats recueillis.

De façon intéressante, la compression et la condensation des gaz de combustion permettent de faire disparaitre le panache de vapeur d'eau parfois visible en cheminée. En ce sens, il est rappelé qu'au sens de la présente description, un gaz de combustion ayant subi un prétraitement quel qu'il soit, notamment par lavage sec ou humide, ou dilution partielle avec de l'air ou un autre gaz, reste un gaz de combustion. La disparition du panache de vapeur, qui est un élément esthétique lié à l'invention, reste cependant un bénéfice non négligeable.

Par ailleurs la compression et le refroidissement des gaz d'échappement peuvent être montés en cascades successives de manière à obtenir des gaz parfaitement secs.

## Revendications

1. Dispositif de récupération de la chaleur contenue dans des gaz de combustion **caractérisé en ce qu'**il comprend : un circuit primaire dans lequel circulent les gaz de combustion et comprenant dans le sens de circulation desdits gaz : - une enceinte (14) pour l'entrée desdits gaz de combustion; - une enceinte (2) étanche sous pression munie d'un compresseur (1) apte à transmettre à des gaz chauds une pression proche de la pression partielle de saturation de la vapeur d'eau; - un média froid (3) sur lequel a lieu un échange de chaleur avec lesdits gaz comprimés afin de récupérer la chaleur sensible au-delà du pouvoir calorifique supérieur (PCS); - un moyen de réglage de type vantelle (5) apte à adapter et réguler la perte de charge créée en amont - un récupérateur de condensats (7) placé sous ledit média froid (3) et coopérant avec un organe de détente ou une pompe (8), et avec un moyen d'évacuation (9); - une enceinte de sortie (10) pour les gaz de combustion traités et secs ; et **en ce qu'**il comprend en outre un circuit secondaire comprenant des moyens de circulation d'un fluide caloporteur à travers au moins ledit média froid (3) qui est apte à condenser la vapeur d'eau contenue dans les gaz de combustion.

2. Dispositif selon la revendication 1 **caractérisé en ce que** le circuit primaire comprend en outre un média chaud (6) apte à augmenter la température desdits gaz, ledit média chaud étant placé à proximité de l'enceinte de sortie (10).

3. Dispositif selon la revendication 1 ou 2 **caractérisé en ce que** ledit circuit primaire comprend en outre un moyen de surchauffe (13), au moins une vanne de répartition (12) étant placée en aval dudit média froid (3) et en amont du moyen de surchauffe (13) relativement au sens d'écoulement dudit fluide caloporteur dans le dispositif, ladite vanne de répartition (12) permettant une dérivation régulée dudit fluide caloporteur vis-à-vis dudit média chaud (6).

4. Dispositif selon la revendication 2 ou la revendication 3 **caractérisé en ce qu'**il comprend en outre un moyen apte à éviter l'entrainement des gouttelettes présentes dans les gaz de combustion, tel qu'un séparateur de gouttelettes (4), ledit moyen étant disposé entre le média froid (3) et le média chaud (6).

5. Dispositif selon l'une des revendications précédentes **caractérisé en ce qu'**il comprend en outre une pompe à chaleur thermodynamique placée en amont dudit média froid (3) ou bien à proximité du moyen (9) d'évacuation des condensats afin d'optimiser la récupération de la chaleur issue des gaz chauds.

6. Dispositif selon l'une des revendications précédentes **caractérisé en ce qu'**il comprend un moyen apte à neutraliser le potentiel hydrogène (pH), placé soit dans l'enceinte étanche (2), soit en aval de l'organe de détente des condensats, soit en amont de ladite pompe à chaleur lorsque ladite pompe à chaleur est placée à proximité du moyen (9) d'évacuation des condensats.

7. Dispositif selon l'une des revendications précédentes **caractérisé en ce qu'**il comprend en outre un moyen de captation des polluants présents dans lesdits condensats.

8. Procédé de récupération de la chaleur contenue dans des gaz de combustion chauds, mis en oeuvre à l'aide d'un dispositif selon l'une quelconque des revendications précédentes **caractérisé en ce qu'**il comprend les étapes consistant à : dans le circuit primaire - comprimer lesdits gaz de combustion ; - condenser l'humidité contenue dans lesdits gaz à une température supérieure à la température de condensation des gaz non comprimés ; - recueillir les condensats issus de ladite condensation ; dans le circuit secondaire - faire circuler un fluide caloporteur afin notamment de condenser la vapeur d'eau contenue dans les gaz de combustion, de chauffer lesdits gaz condensés.

9. Procédé selon la revendication 8 **caractérisé en ce qu'**il consiste en outre à surchauffer ledit fluide caloporteur en refroidissant lesdits gaz avant de les comprimer.

10. Procédé selon la revendication 8 ou la revendication 9 **caractérisé en ce qu'**il consiste en outre à réguler ladite compression des gaz de combustion soit directement au niveau dudit compresseur (2) soit en agissant sur le moyen de réglage (5).

## Patentansprüche

1. Vorrichtung zur Rückgewinnung von in Verbrennungsgasen enthaltener Wärme, **dadurch gekennzeichnet, dass** sie folgendes umfasst: einen Primärkreislauf, in dem die Verbrennungsgase zirkulieren und welcher in der Zirkulationsrichtung besagter Gase folgendes enthält: - eine Kammer (14) zum Einlassen besagter Verbrennungsgase; - eine druckdichte Kammer (2), die mit einem Verdichter (1) versehen ist, der auf die heißen Gase einen Druck übertragen kann, der sich dem Partialsättigungsdruck des Wasserdampfes annähert; - ein kaltes Medium (3), auf dem ein Wärmeaustausch mit den besagten verdichteten Gasen stattfindet, um die oberhalb des Brennwerts fühlbare Wärme zurück zu gewinnen; - ein Einstellmittel vom Typ Füllschütz (5), das in der Lage ist, den stromaufwärts entstandenen Druckverlust auszugleichen und zu regulieren; - eine Kondenswasserrückgewinnungsvorrichtung (7), die unter besagtes kaltes Medium (3) positioniert wird und mit einem Entspannungselement oder einer Pumpe (8) zusammenwirkt, und ein Ablassmittel (9) aufweist; - eine Auslasskammer (10) für die behandelten, trockenen Verbrennungsgase; und dadurch, dass sie des Weiteren einen Sekundärkreislauf umfasst mit Mitteln zum Zirkulieren einer Wärmeträgerflüssigkeit durch mindestens das besagte kalte Medium (3), das in der Lage ist, den in den Verbrennungsgasen enthaltenen Wasserdampf zu kondensieren.

2. Vorrichtung nach Anspruch 1, **dadurch gekennzeichnet, dass** der Primärkreislauf des Weiteren ein warmes Medium (6) umfasst, das in der Lage ist, die Temperatur der besagten Gase zu erhöhen, wobei das warme Medium in der Nähe der Auslasskammer (10) positioniert wird.

3. Vorrichtung nach Anspruch 1 der 2, **dadurch gekennzeichnet, dass** besagter Primärkreislauf des Weiteren ein Überhitzungsmittel (13) umfasst, mindestens ein Verteilventil (12), welches in Bezug auf die Fließrichtung der besagten Wärmeträgerflüssigkeit in der Vorrichtung hinter dem besagten kalten Medium (3) und vor dem Überhitzungsmittel (13) positioniert ist, wobei besagtes Verteilerventil (12) eine geregelte Ableitung der besagten Wärmeträgerflüssigkeit in Bezug auf das besagte heiße Medium (6) ermöglicht.

4. Vorrichtung nach Anspruch 2 oder Anspruch 3, **dadurch gekennzeichnet, dass** sie des Weiteren ein Mittel umfasst, das in der Lage ist, das Mitführen der im Verbrennungsgas enthaltenen Tropfen zu verhindern, wie zum Beispiel ein Tropfenabscheider (4), wobei besagtes Mittel zwischen dem kalten Medium (3) und dem warmen Medium (6) angeordnet wird.

5. Vorrichtung nach einem der vorhergehenden Ansprüche, **dadurch gekennzeichnet, dass** sie des Weiteren zur Optimierung der Rückgewinnung der Wärme aus den warmen Gasen eine thermodynamische Wärmepumpe oberhalb des besagten kalten Mediums (3) oder in der Nähe des Kondenswasserablaufmittels (9) aufweist.

6. Vorrichtung nach einem der vorhergehenden Ansprüche, **dadurch gekennzeichnet, dass** sie ein Mittel zur Neutralisierung des pH-Werts umfasst, das entweder in der dichten Kammer (2) oder hinter dem Expansionselement für Kondenswasser oder vor der besagten Wärmepumpe positioniert wird, wenn besagte Wärmepumpe in die Nähe des Kondenswasserablaufmittels (9) positioniert wird.

7. Vorrichtung nach einem der vorhergehenden Ansprüche, **dadurch gekennzeichnet, dass** sie des Weiteren ein Mittel zur Erfassung der im Kondenswasser enthaltenen Schadstoffe ist.

8. Verfahren zur Rückgewinnung der in heißen Verbrennungsgasen enthaltenen Wärme, das mithilfe einer Vorrichtung nach einem der vorhergehenden Ansprüche umgesetzt wird, **dadurch gekennzeichnet, dass** es die folgenden Schritte umfasst: im primären Kreis das Verdichten der besagten Verbrennungsgase; - das Kondensieren der in den Gasen enthaltenen Feuchtigkeit bei einer Temperatur größer der Kondensationstemperatur nicht verdichteter Gase; - das Sammeln des aus besagter Kondensation stammenden Kondenswassers; im Sekundärkreislauf - das Zirkulieren einer Wärmeträgerflüssigkeit, um insbesondere den in den Verbrennungsgasen enthaltenen Wasserdampf zu kondensieren und die kondensierten Gase zu erhitzen.

9. Verfahren nach Anspruch 8, **dadurch gekennzeichnet, dass** es des Weiteren darin besteht, besagte Wärmeträgerflüssigkeit durch Abkühlen der besagten Gase vor deren Verdichtung zu überhitzen.

10. Verfahren nach Anspruch 8 oder Anspruch 9, **dadurch gekennzeichnet, dass** es darin besteht, besagte Verdichtung der Verbrennungsgase entweder direkt an besagtem Verdichter (2) oder durch Einwirken auf das Einstellmittel (5) zu regulieren.

## Claims

1. A device for recovering heat contained in combustion gases, **characterised in that** it comprises: a primary circuit in which the combustion gases circulate and comprising the following, in the circulation direction of said gases: - an enclosure (14) for the intake of said combustion gases; - a pressurised sealed enclosure (2) provided with a compressor (1) capable of transmitting to hot gases a pressure close to the partial saturation pressure of the water steam; - a cold medium (3) on which a heat exchange with said compressed gases takes place in order to recover the heat that can be sensed beyond the higher heating value (HHV); - an adjustment means such as a gate (5) capable of adapting and adjusting the head loss created upstream; a condensate recovery medium (7) placed under said cold medium (3) and engaging with an expansion member or a pump (8) and with a discharge means (9) ; an outlet enclosure (10) for the treated and dry combustion gases; and **in that** it also comprises a secondary circuit comprising means for circulating a heat transfer fluid through at least said cold medium (3) which is capable of condensing the water steam contained in the combustion gases.

2. The device according to claim 1, **characterised in that** the primary circuit also comprises a hot medium (6) capable of increasing the temperature of said gases, said hot medium being placed near the outlet enclosure (10).

3. The device according to claim 1 or 2, **characterised in that** said primary circuit also comprises an overheating means (13), at least one distribution valve (12) being placed downstream from said cold medium (3) and upstream from said overheating means (13) relative to the flow direction of said heat-transfer fluid in the device, said distribution valve (1) allowing a regulated tapping of said heat-transfer fluid with respect to said hot medium (6).

4. The device according to claim 2 or claim 3, **characterised in that** it also comprises a means capable of preventing the carry-over of the droplets present in the combustion gases, such as a droplet separator (4), said means being disposed between the cold medium (3) and the hot medium (6).

5. The device according to one of the preceding claims, **characterised in that** it also comprises a thermodynamic heat pump placed upstream from said cold medium (3) or else close to the condensate discharge means (9) in order to optimise the recovery of the heat from the hot gases.

6. The device according to one of the preceding claims, **characterised in that** it comprises a means capable of neutralising the potential hydrogen (pH), placed either in the sealed enclosure (2), downstream from the condensate expansion member, or upstream from said heat pump when said heat pump is placed near the condensate discharge means (9).

7. The device according to one of the preceding claims, **characterised in that** it also comprises a means for capturing pollutants contained in said condensates.

8. A method for recovering heat contained in hot combustion gases, implemented by means of a device according to any one of the preceding claims, **characterised in that** it comprises the following steps consisting of: in the primary circuit: - compressing said combustion gases; - condensing the moisture contained in said gases at a temperature higher than the non-compressed gas condensation temperature; collecting the condensates from said condensation; in the secondary circuit: - circulating a heat-transfer fluid in order, in particular, to condense the water steam contained in the combustion gases, and to heat said condensed gases.

9. The method according to claim 8, **characterised in that** it also consists of overheating said heat-transfer fluid by cooling said gases before compressing them.

10. The method according to claim 8 or claim 9, **characterised in that** it also consists of regulating said compression of combustion gases either directly in said compressor (2) or by acting on the adjustment means (5).
